# EUROPÄISCHE PATENTSCHRIFT

(11) **EP 0 461 444 B1**
(45) Veröffentlichungstag und Bekanntmachung des Hinweises auf die Patenterteilung: **24.02.1993**
(21) Anmeldenummer: 91108388.9
(22) Anmeldetag: 24.05.1991
(51) Int. Cl.: E04B 1/80, F16L 59/02

(54) **Wärmedämmung für grosse Temperaturintervalle im Tieftemperaturbereich**
Heat insulation for large differences of temperature, in the range of low temperatures
Isolation thermique pour de grandes différences de température dans la plage detempératures basses

(30) Priorität: 09.06.1990 DE 4018519
(43) Veröffentlichungstag der Anmeldung: 18.12.1991
(73) Patentinhaber: KAEFER Isoliertechnik GmbH & Co. Kommanditgesellschaft, D-28195 Bremen (DE)
(72) Erfinder: Bremeyer, Walter, W-2860 Osterholz-Scharmbeck (DE); Poblotzki, Joachim, W-2863 Ritterhude (DE); Rhode, Holger, W-2807 Achim (DE); Kück, Hans-Jürgen, W-2800 Bremen 1 (DE)
(74) Vertreter: Bruse, Willy Hans Heinrich

(56) Entgegenhaltungen:
- DE-A- 2 927 026
- DE-A- 3 237 596
- DE-A- 3 312 414
- DE-A- 3 528 776
- DE-U- 8 800 562
- FR-A- 2 198 084

## Beschreibung

Die Erfindung bezieht sich auf eine Wärmedämmung der Gattung nach dem Oberbegriff des Patentanspruches 1.

Die FR-A-219 8084 offenbart eine solche Wärmedämmung für große Temperaturintervalle im Tieftemperaturbereich, bei der einander benachbarte Paneele aus Schaumstoff zwischen sich Fugen einschließen und parallel zur Ebene der Paneele sich erstreckende Dehnungseinlagen aus einem Kunststoffschaum in stoffschlüssiger Verbindung mit dem Werkstoff der Paneele vorgesehen sind, wobei die Paneele an den Randseiten ringumlaufend angeordnete, schlitzförmige Einschnitte aufweisen, die die Dehnungseinlagen aufnehmen, und die (d.h. die Einschnitte) sich nur am Rand der Paneele über einen Teilbereich der Grundfläche erstrecken.

Die DE-PS 30 42 374 beschreibt eine Wärmedämmung zur Kompensation von Spannungen im Material der Wärmedämmung, die sich dadurch ergeben, daß die Wärmedämmung sich bei Benutzung des gedämmten Gegenstandes auf der kalten Seite zusammenzieht, auf der warmen Seite jedoch das bisherige Volumen etwa beibehält. In der Regel befindet sich die Wärmedämmung auf der warmen Seite der Umgebungstemperatur, die recht unterschiedlich sein kann. Da die Herstellung der Paneele für die Wärmedämmung bei Raumtemperatur erfolgt, können aufgrund der hohen Temperaturdifferenz zwischen der kalten Innenseite und der warmen Umgebung auf der Außenseite hohe Spannungen im Material der Wärmedämmung entstehen, welche vor allem dann zu Rissen oder anderen Beschädigungen der Wärmedämmung führen, wenn die Innentemperatur, zum Beispiel wegen nur zeitweiliger Nutzung des Gegenstandes, häufig wechselt. Zur Uberwindung dieser Probleme besteht die bekannte Wärmedämmung aus mehreren Schaumstoffschichten, von denen wenigstens die auf der kalten Seite angeordnete Schicht aus einer Mehrzahl von durch mit elastischem Isoliermaterial ausgefüllten Fugen von einander getrennten Platten oder Paneelen besteht, welche mit der benachbarten Schaumstoffschicht stoffschlüssig verbunden ist, wobei sich wenigstens zwischen den beiden kältesten Schaumstoffschichten eine mit beiden Schichten stoffschlüssig verbundene Zwischenschicht aus flexiblem Material erstreckt, die schubweich ist und eine Mindestdicke aufweist, die etwa 5 % der Gesamtdicke der beiden durch die Zwischenschicht verbundenen Schaumstoffschichten beträgt. Eine solche Wärmedämmung wird am Verwendungsort aus Platten und Fugenmaterial aufgebaut und stellt hohe Anforderungen an die Qualität der durchzuführenden Arbeiten, um die für die spätere Funktion notwendigen Parameter einzuhalten.

Aufgabe der Erfindung ist eine Gestaltung der Wärmedämmung für die genannten Anforderungen, die wesentlich einfacher auszuführen ist, weitestgehend in einer Werkstatt vorgefertigt werden kann und kostengünstiger mit größerer Sicherheit für eine einwandfreie Funktion herstellbar ist.

Diese Aufgabe löst die Erfindung durch die Merkmale des Kennzeichens des Patentanspruches 1 in Verbindung mit den Merkmalen des Oberbegriffes des Patentanspruches 1.

Diesen Gestaltungsmerkmalen liegt die Erkenntnis zugrunde, daß die Spannungen im wesentlichen in den Randbereichen einzelner Paneele auftreten, so daß es ausreicht, elastische Zonen lediglich in den Randbereichen der Paneele vorzusehen, um diesen Paneelen bei Temperaturdifferenzen zwischen der kalten und der warmen Seite schüsselartige Verformungsbewegungen zu erlauben. Durch die Anordnung der elastischen Zonen lediglich im Randbereich der Paneele wird ermöglicht, daß diese Paneele durchgehend aus dem gleichen Werkstoff hergestellt werden können, so daß die Verbindung mehrerer Schichten durch Klebematerial entfällt. Die Paneele können nunmehr in einer Stärke hergestellt werden, die der erforderlichen Gesamtdicke einer Wärmedämmung entspricht. Dadurch wird die Vorfertigung der Paneele in der Dicke der herzustellenden Wärmedämmung in einer Werkstatt ermöglicht, wobei die Paneele vorteilhaft in einem Stück geformt werden, jedoch auch aus mehreren unterschiedlich dicken Schichten des gleichen Materials aufgebaut sein können, wie es später noch anhand eines Ausführungsbeispieles erläutert wird. Bei der Vorfertigung der Paneele in einer Werkstatt werden die die Dehnungseinlagen aufnehmenden Einschnitte am Rand der Paneele so vorgesehen und auf Grund der allgemeinen Kenntnisse über die Festigkeit des Werkstoffes sowie der Wärmedämmwerte derart angeordnet, daß die zulässigen Spannungen in den darunterliegenden Bereichen nicht überschritten werden. Es wird dadurch erreicht, daß die in den Dämmpaneelen auftretenden Spannungen die maximal zulässigen Werte nicht überschreiten. In diese Einschnitte werden gemäß einem weiteren vorteilhaften Erfindungsgedanken die Dehnungseinlagen bereits bei der Vorfertigung der Paneele mit einer Vorspannung eingebracht, wodurch eine stoffschlüssige Verbindung der Dehnungseinlagen mit dem Werkstoff des Paneels an der den Einschnitt begrenzenden Wandflächen erlangt wird.

Nach einem weiteren vorteilhaften Gedanken zur Ausgestaltung der Erfindung ist vorgesehen, daß die Wärmedämmung einschichtig aus Paneelen mit einem abgestuften Rand aufgebaut ist, der auf der kalten Seite zwischen aneinandergrenzenden Paneelen Fugen zur Aufnahme der Füllung aus elastischem Isolierwerkstoff bildet und auf der warmen Seite einen Vorstehrand der Paneele ergibt, mit dem die Paneele unmittelbar aneinanderstoßen. Dies erleichtert die Montage der Wärmedämmung aus vorgefertigten Paneelen erheblich. Diese Paneele werden mit dem Vorstehrand unmittelbar aneinanderstoßend auf der mit der Wärmedämmung zu isolierenden Fläche montiert. In die sich dann ergebenden offenen Fugen werden von der offenen Seite her Füllungen aus elastischem Isolierwerkstoff eingebracht, welche eine stoffschlüssige Verbindung mit dem Werkstoff der Paneele und mit dem Werkstoff der Dehnungseinlagen eingehen. Zum Zwecke der Optimierung der Wärmedämmung liegt die Randstufe solcher Paneele etwa in der Verlängerung der Begrenzungswand des die Dehnungseinlagen aufnehmenden Einschnitts am Rand der Paneele.

Der Vollständigkeit halber ist zu erwähnen, daß nicht nur die einzelnen Paneele aus mehreren Schichten aufgebaut sein können, sondern daß die Erfindungsmerkmale auch anwendbar sind, wenn eine Isolierung mehrschichtig aus versetzt übereinander angeordneten Paneelen besteht, wie dies zum Beispiel auch in der bereits erwähnten DE-PS 30 42 374 beschrieben wird.

Auf der Zeichnung sind Ausführungsbeispiele der Erfindung dargestellt. Es zeigen:
Figur 1 eine Draufsicht auf die kalte Seite eines Paneels für eine Wärmedämmung,
Figur 2 einen Querschnitt nach der Linie II - II der Figur 1 eines Ausführungsbeispieles,
Figur 3 einen Querschnitt nach der gleichen Linie eines abgeänderten Ausführungsbeispieles und
Figur 4 einen Querschnitt durch eine Wärmedämmung aus Paneelen nach dem Ausführungsbeispiel der Figur 2.

Die Paneele zur Herstellung einer Wärmedämmung bestehen aus einem geeigneten Kunststoffschaum, insbesondere aus einem Polyurethanschaum. Die Paneele 1 nach dem Ausführungsbeispiel sind mit einem abgestuften Rand 2 ausgebildet, der auf der kalten Seite K zwischen aneinandergrenzenden Paneelen Fugen 3 zur Aufnahme einer Füllung aus einem elastischen Isolierwerkstoff bildet und auf der warmen Seite W einen Vorstehrand 4 der Paneele ergibt, mit dem diese auf der warmen Seite in der Wärmedämmung unmittelbar aneinanderstoßen. In Höhe des Vorstehrandes sind Einschnitte 5 vorgesehen , die sich vom Rand her etwa parallel zu den beiden Außenflächen des Paneels erstrecken. Die Höhe des Vorstehrandes und die Tiefe der Einschnitte sind so bemessen, daß die sich aus dem Temperaturunterschied auf beiden Seiten des Paneels ergebenden Spannungen den maximal zulässigen Spannungswert nicht überschreiten. Die an den paneelen ringsumlaufend angeordneten Einschnitte 5 nehmen Dehnungseinlagen 6 aus einem weichelastischen Isoliermaterial auf. Diese Dehnungseinlagen 6 sind mit einer gewissen Vorspannung in die Einschnitte 5 eingebracht, so daß dadurch eine stoffschlüssige Verbindung der Dehnungseinlagen 6 mit den Begrenzungswänden der Einschnitte 5 erreicht wird. Die eine der seitlichen Begrenzungsflächen der Einschnitte 5 liegt somit in Höhe der Randstufe 4 jedes Paneels.

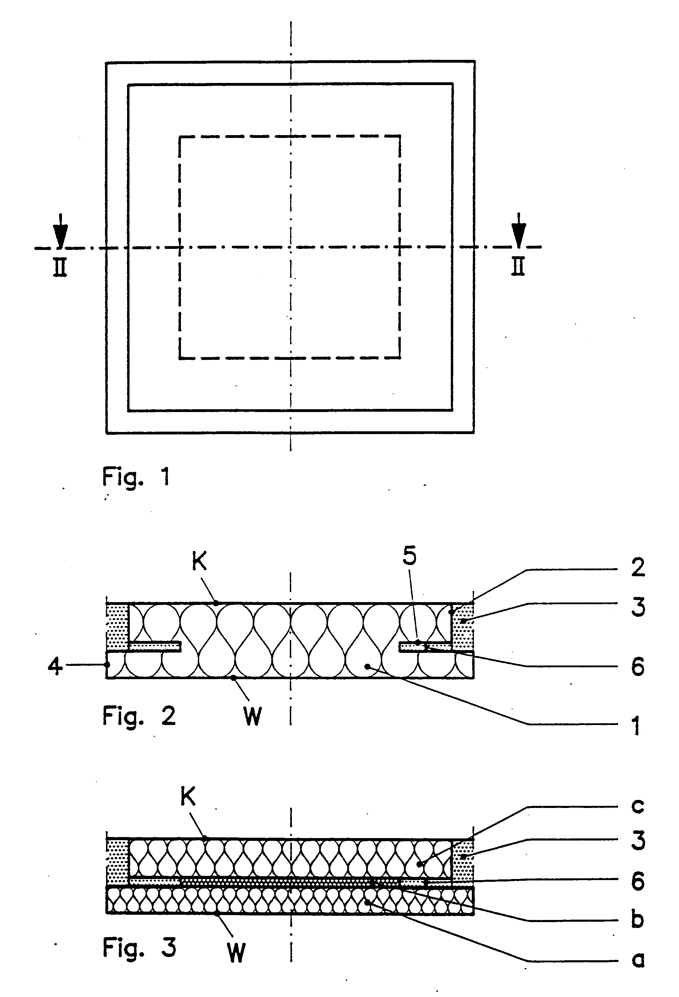

Das Ausführungsbeispiel in Figur 2 zeigt einen Querschnitt eines einstückig aus einem Polyurethanschaum hergestellten Paneels. Demgegenüber ist das Paneel entsprechend Figur 3 aus drei Schichten a, b und c aufgebaut, wobei die Schicht a der Höhe des Vorstehrandes, die Schicht b der Breite der Einschnitte 5 und die Schicht c der Resthöhe der Paneeldicke entspricht. Die Schichten a, b und c bestehen vorteilhaft aus dem gleichen Werkstoff, wodurch jedoch nicht ausgeschlossen werden soll, für die Herstellung dieser Schichten ggf. unterschiedliche Isolierwerkstoffe zu verwenden. Der in Figur 3 dargestellte Aufbau der Paneele erleichtert ggf. deren Herstellung und das Einbringen der Dehnungseinlagen 6 in die Einschnitte 5.

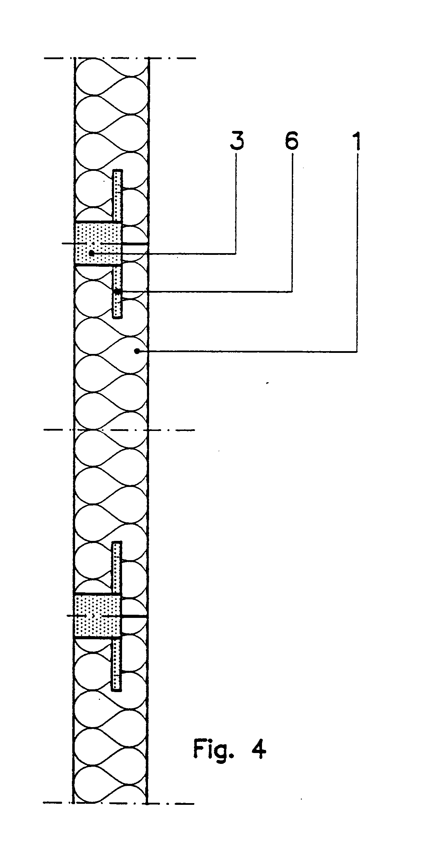

Zum Aufbau einer Wärmedämmung werden Paneele 1 entsprechend der Darstellung in Figur 4 montiert, so daß sie mit dem Vorstehrand 4 gegeneinanderstoßen. In die dann auf der gegenüberliegenden Seite offenen Fugen wird ein elastischer Isolierwerkstoff eingebracht, so daß er eine stoffschlüssige Verbindung mit den Begrenzungsflächen der Paneele für die Fugen und mit den Dehnungseinlagen 6 eingeht. Der elastische Isolierwerkstoff kann in an sich bekannter Weise in flüssiger Form oder als vorgefertigter Streifen eingebracht werden, der an den Berührungsflächen mit dem Werkstoff des Paneels und der Dehnungseinlagen 6 verklebt wird.

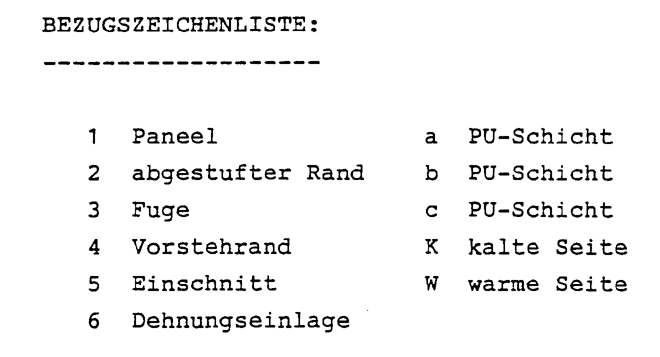

## Patentansprüche

1. Wärmedämmung für große Temperaturintervalle im Tieftemperaturbereich, bei der einander benachbarte Paneele (1) aus Schaumstoff zwischen sich Fugen (3) einschließen und parallel zur Ebene der Paneele sich erstreckende Dehnungseinlagen (6) aus einem elastischen Isoliermaterial in stoffschlüssiger Verbindung mit dem Werkstoff der Paneele (1) vorgesehen sind, wobei die Paneele (1) an den Randseiten ringsumlaufend angeordnete, schlitzförmige Einschnitte (5) aufweisen, die die Dehnungseinlagen (6) aufnehmen, dadurch gekennzeichnet, daß die Paneele (1) zwischen sich Fugen (3) mit einer Füllung aus einem elastischen Isolierwerkstoff einschließen und sich die aus einem Kunststoffweichschaum bestehenden Dehnungseinlagen (6) nur innerhalb der schlitzförmigen Einschnitte (5) befinden.

2. Wärmedämmung nach Anspruch 1, dadurch gekennzeichnet, daß die Dehnungseinlagen (6) mit einer Vorspannung in die Einschnitte (5) eingebracht sind und dadurch ihre stoffschlüssige Verbindung mit dem Werkstoff der Paneele (1) erlangen.

3. Wärmedämmung nach einem der vorhergehenden Ansprüche, dadurch gekennzeichnet, daß sie einschichtig aus Paneelen (1) mit einem abgestuften Rand (2) aufgebaut ist, der auf der kalten Seite (K) zwischen aneinandergrenzenden Paneelen (1) Fugen (3) zur Aufnahme der Füllung aus elastischem Isolierwerkstoff bildet und auf der warmen Seite (W) einen Vorstehrand (4) der Paneele (1) ergibt, mit dem die Paneele unmittelbar aneinanderstoßen.

4. Wärmedämmung nach Anspruch 3, dadurch gekennzeichnet, daß die Randstufe (4) etwa in der Verlängerung der Begrenzungswand des Einschnitts (5) am Rand des Paneels (1) liegt.

5. Wärmedämmung nach den Ansprüchen 3 und 4, dadurch gekennzeichnet, daß das Paneel (1) aus mehreren Schichten einstückig verklebt ist, wobei eine Schicht (b) eine Dicke entsprechend der Breite des Einschnitts (5) am Paneelrand, eine Schicht (a) eine Dicke entsprechend der Höhe des Vorstehrandes (4) und wenigstens eine weitere Schicht (c) eine Dicke entsprechend der Höhe der Abstufung, vermindert um die Breite des Einschnitts (5), aufweist.

## Claims

1. Heat insulation for large temperature differentials in the low temperature region, in which adjoining panels (1) of foam material include joints (3) therebetween and expansion inserts (6) of a resilient insulating material connected by engagement of material to the material of the panels (1) are provided parallel to the plane of the panels, wherein the panels (1) have surrounding, slot-like grooves (5) at the side edges, which receive the expansion inserts (6), characterized in that the panels (1) include joints (3) therebetween with a filling of a resilient insulating material and the expansion inserts (6) consisting of a soft plastics foam are located only within the slot-like grooves (5).

2. Heat insulation according to claim 1, characterized in that the expansion inserts (6) are fitted with pre-compression in the grooves (5) and achieve thereby their connection by a tight fit with the material of the panels (1).

3. Heat insulation according to either of the preceding claims, characterized in that it is built up in a single layer from panels (1) with a rebated edge (2), which forms joints (3) on the cold side (K) between adjoining panels (1) for reception of the filling of resilient insulating material and provides a projecting margin (4) of the panels (1) on the warm side (W), by means of which the panels abut each other directly.

4. Heat insulation according to claim 3, characterized in that the rebate (4) lies approximately in the extension of the bounding wall of the groove (5) at the edge of the panel (1).

5. Heat insulation according to claims 3 and 4, characterized in that the panel (1) is bonded into one piece from a plurality of layers, wherein one layer (**b**) has a thickness corresponding to the width of the groove (5) at the panel edge, a layer (**a**) has a thickness corresponding to the height of the projecting margin (4) and at least one further layer (**c**) has a thickness corresponding to the height of the rebate, less the width of the groove (5).

## Revendications

1. Isolation thermique pour grands intervalles de température dans le domaine des basses températures, dans laquelle des panneaux (1) en mousse, mutuellement voisins, enferment entre eux des joints (3) et où sont prévus des insertions des dilatations (6) s'étendant parallèlement au plan des panneaux et faites d'une matière isolante élastique qui est liée à la matière des panneaux (1) par une liaison par matière, les panneaux (1) présentant le long de leurs bords, des entrailles (5) en forme de fente, prévues sur tout le tour, qui reçoivent les insertions de dilatation (6), caractérisée en ce que les panneaux (1) enferment entre eux des joints (3) contenant un remplissage fait d'une matière isolante élastique, et les insertions de dilatation (6) composées d'une mousse molle en matière plastique se trouvent uniquement à l'intérieur des entailles (5) en forme de fente.

2. Isolation thermique selon la revendication 1, caractérisée en ce que les insertions de dilatation (6) sont encastrées dans les entailles (5) avec précontrainte et entrent de cette façon en liaison par matière avec la matière des panneaux (1).

3. Isolation thermique selon une des revendications précédentes, caractérisée en ce qu'elle est construite en une seule couche à partir de panneaux (1) possédant un bord échelonné (2) qui forme, sur le côté froid (K), entre les panneaux (1) voisins entre eux, des joints (3) destinés à recevoir le remplissage en matière isolante élastique tandis que sur le côté chaud (W) il donne naissance à un rebord saillant (4) des panneaux (1), par lequel les panneaux sont directement en contact.

4. Isolation thermique selon la revendication 3, caractérisée en ce que l'épaulement (4) du bord se trouve quelque peu dans le prolongement de la paroi limite de l'entaille (5) au bord du panneau (1).

5. Isolation thermique selon les revendications 3 et 4, caractérisée en ce que le panneau (1) est formé par collage de plusieurs couches réunies en une seule pièce, une couche (b) présentant une épaisseur qui correspond à la largeur de l'entaille (5) prévue au bord du panneau, une couche (a) présentant une épaisseur correspondant à la hauteur du bord saillant (4) et au moins une autre couche (c) correspondant à la hauteur de la feuillure diminuée de la largeur de l'entaille (5).
